# EUROPEAN PATENT SPECIFICATION

(11) **EP 2 169 280 B1**
(45) Date of publication and mention of the grant of the patent: **21.09.2011**
(21) Application number: 09171505.2
(22) Date of filing: 28.09.2009
(51) Int. Cl.: F16H 63/30

(54) **Transmission and method for manufacturing same**
Getriebe und Herstellungsverfahren dafür
Transmission et procédé de fabrication associé

(30) Priority: 29.09.2008 JP 2008250635
(43) Date of publication of application: 31.03.2010
(73) Proprietor: Toyota Jidosha Kabushiki Kaisha, Toyota-shi, Aichi 471-8571 (JP); AISIN AI Co., Ltd., Nishio-shi Aichi-ken 445-0006 (JP)
(72) Inventor: Kato, Junichi, Toyota-shi Aichi 471-8571 (JP); Suzuki, Michinobu, Toyota-shi Aichi 471-8571 (JP); Ichikawa, Masahiko, Toyota-shi Aichi 471-8571 (JP); Yamada, Takafumi, Nishio-shi Aichi 445-0006 (JP); Horita, Hiroshi, Nishio-shi Aichi 445-0006 (JP)
(74) Representative: TBK

(56) References cited:
- EP-A- 0 488 857
- EP-A- 0 685 667
- DE-A1-102006 029 166
- JP-A- 11 022 823
- JP-A- 2005 042 804

## Description

The invention relates to a transmission and a method for manufacturing a transmission according to the preamble of claims 1 and 6, respectively.

An automated manual transmission (AMT) or multi-mode manual transmission (MMT) in which an actuator of an electric motor direct operation type is added to the manual transmission of the related art, and an electronic throttle, various sensors, a special shift lever, and a special Electronic Control Unit (ECU) are additionally provided at a vehicle has been disclosed. The AMT or MMT is a transmission in which: (1) a clutch operation is automated, (2) when an automatic shift mode is selected, an optimum gear state corresponding to the travel conditions such as vehicle speed and accelerator depression amount is selected in the same manner as in the automatic transmission, and (3) when a manual shift mode is selected, the shift operation is automated by a shift signal produced by shift lever operations (upshifting, downshifting). In the AMT or MMT, it is possible to switch appropriately between an automatic shifting mode in which the vehicle is easy to drive and fuel consumption is lower than that in the vehicles with manual transmission, and a manual mode in which drive operations intended by the driver can be performed and the vehicle can be driven in a sports manner with a feel of light and direct control of the vehicle, as in a vehicle with manual transmission.

A vehicle equipped with such AMT or MMT has been suggested, this vehicle including a shift & select actuator that drives with a motor a shift select shaft that performs an operation of switching shift gears of a plurality of stages, and a clutch actuator that implements engagement and disengagement of a clutch by motor drive (see, for example, (JP-A-2005-42804).

For the AMT or MMT to function correctly, the actuator has to be installed in a state in which the position and phase of the actuator are matched to those of the shaft engaged with the actuator. In the AMT or MMT of the related art, a positioning mechanism such as a lock ball is provided in both the interface part at the shaft side and in the interface part at the actuator side. As a result, the actuator can be installed in a state in which the position and phase thereof are matched to those of the shaft by installing the actuator inside the housing in a state in which the shaft is fixed to the predetermined position inside the housing. However, because the positioning mechanism is a part that is used only when the actuator is installed and is not used at all during shifting, it is a factor increasing the production cost of AMT or MMT.

When the positioning mechanism at the shaft that is engaged with the actuator is discarded to reduce the cost, the actuator can be installed in a state in which the position and phase thereof are matched to those of the shaft by positioning the shaft by moving the shaft reciprocatively in the axial direction and rotating about the axis and then stopping the positioned shaft. However, in this case, the number of operations necessary to manufacture the AMT or MMT is increased. The resultant problem is that productivity is decreased and the production cost is increased.

DE 10 2006 029 166 A1 discloses a generic transmission having the features of the preamble of claim 1 and a method for manufacturing a transmission according to the features of the preamble of claim 6.

Further transmissions are known from EP-A-0 488 857, EP-A-0 685 667, and JP 11 022823 A, respectively.

It is the object of the invention to provide a transmission in which the installation of an actuator that is matched in position and phase can be easily conducted without providing a positioning mechanism, and a method for manufacturing the same.

The object is achieved with a transmission having the features of claim 1 and a method for manufacturing a transmission having the features of claim 6.

Further advantageous developments of the invention are subject-matter of the dependent claims.

The transmission according to the first aspect of the invention has a drive shaft that rotates upon receiving a drive power from a drive source, and a driven shaft disposed parallel to the drive shaft, and the transmission performs shifting by converting a rotation speed of the drive shaft and transmitting the rotation to the driven shaft by switching shift gears of a plurality of stages. The transmission includes a shaft, an actuator, and a housing. The shaft switches a meshing state of shift gears and establishes a shifting operation by moving reciprocatively in an axial direction and rotating about an axis. The actuator moves the shaft during shifting. The housing encloses the shaft and the actuator. The shaft includes a stopper that abuts against the housing and restricts the rotation of the shaft about the axis. The housing includes a stopper surface against which the stopper abuts. The stopper surface is formed in a position outside a shaft movable range in which the shift select shaft rotates about the axis during shifting.

In the transmission, the shaft may have a lever portion that protrudes from an outer circumferential surface of the shaft. A concave portion into which the lever portion can be inserted may be formed in the actuator. When installed inside the housing, the actuator may rotate the shaft about the axis to move the shaft into the shaft movable range by inserting the lever portion into the concave portion in a state in which the stopper is in contact with the stopper surface and the shaft is stopped.

When the actuator is installed inside the housing, the lever portion may come into contact with a circumferential edge portion of the concave portion, may slide along the circumferential edge portion and may be inserted into the concave portion. The circumferential edge portion may be subjected to chamfering.

When the actuator is installed inside the housing, the actuator may be positioned outside an actuator movable range in which the actuator can move during shifting, to cause the lever portion to be inserted into the concave portion.

The second aspect of the invention relates to a method for manufacturing a transmission which has a drive shaft that rotates upon receiving a drive power from a drive source, and a driven shaft disposed parallel to the drive shaft, and in which shifting is performed by converting a rotation speed of the drive shaft and transmitting the rotation to the driven shaft by switching shift gears of a plurality of stages. This manufacturing method includes a step of preparing a shaft that switches a meshing state of the shift gears and establishes a shifting operation by moving reciprocatively in an axial direction and rotating about an axis; a step of preparing an actuator that moves the shaft during shifting; a step of preparing a housing that encloses the shaft and the actuator; a step of causing a stopper that is provided at the shaft to abut against a stopper surface formed at the housing in a position outside a shaft movable range in which the shaft moves during shifting, and stopping the shaft inside the housing; and a step of engaging the actuator with the shaft and installing the actuator inside the housing, while moving the shaft into the shaft movable range.

With the transmission in accordance with the invention, the actuator and shaft can be easily matched in position and phase by abutting the stopper provided at the shaft against the stopper surface formed at the housing and restricting the shaft movement. Therefore, the actuator can be easily engaged with the shaft and installed inside the housing.

The foregoing and further features and advantages of the invention will become apparent from the following description of example embodiments with reference to the accompanying drawings, wherein like numerals are used to represent like elements, and wherein:
FIG. 1 is a general drawing illustrating a vehicle equipped with the transmission according to Embodiment 1;
FIG. 2 is a control block diagram of the vehicle shown in FIG 1;
FIG. 3 is a schematic diagram illustrating a shift pattern in the vehicle shown in FIG. 1;
FIG. 4 is a sectional view from the axial direction of the shift select shaft of each engagement portion for forward stages and periphery thereof in the select-shift mechanism;
FIG. 5 is a perspective view of a shift select shaft;
FIG. 6 is a partial sectional schematic view illustrating an example of engagement state of the shift select shaft and select gear;
FIG. 7 is an enlarged schematic drawing illustrating the vicinity of distal end portions of hook portions of the select gear;
FIG 8 is a sectional schematic view illustrating a state in which the shift select shaft is in the fifth speed or sixth speed select position;
FIG. 9 is a cross-sectional schematic view illustrating a state in which the shift select shaft is disposed in a reverse select position;
FIG 10 is a cross-sectional schematic view illustrating an arrangement of the shift select shaft when the shift & select actuator is assembled;
FIG. 11 is a partial cross-sectional schematic view illustrating a first process of assembling the shift & select actuator of Embodiment 1;
FIG. 12 is a partial cross-sectional schematic view illustrating a second process of assembling the shift & select actuator of Embodiment 1;
FIG 13 is a partial cross-sectional schematic view illustrating a third process of assembling the shift & select actuator of Embodiment 1;
FIG. 14 is a partial cross-sectional schematic view illustrating a fourth process of assembling the shift & select actuator of Embodiment 1;
FIG 15 is a flow diagram illustrating a method for manufacturing the transmission of Embodiment 1;
FIG 16 is a partial cross-sectional schematic view illustrating a first process of assembling the shift & select actuator of Embodiment 2;
FIG 17 is a partial cross-sectional schematic view illustrating a second process of assembling the shift & select actuator of Embodiment 2;
FIG. 18 is a partial cross-sectional schematic view illustrating a third process of assembling the shift & select actuator of Embodiment 2; and
FIG 19 is a flowchart illustrating a method for manufacturing the transmission of Embodiment 2.

Embodiments of the invention will be described below with reference to the appended drawings. In the drawings below, like or corresponding components are assigned with like reference numerals and redundant explanation thereof is omitted.

In the below-described embodiments, various constituent elements are not mandatory for the invention, unless so stated specifically. Further, in the embodiments below, numbers and amounts are merely exemplary, unless so stated specifically, and the scope of the invention is not limited to the described numbers and amounts.

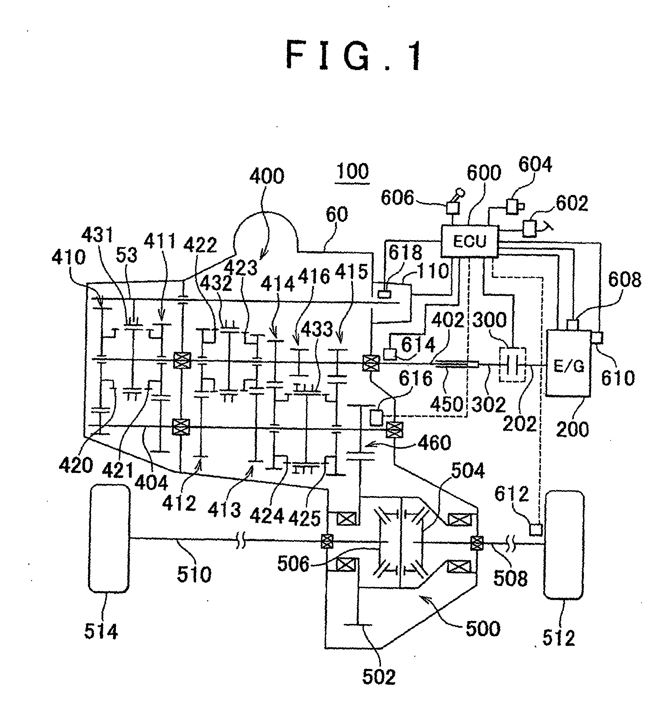

FIG. 1 is a general drawing illustrating a vehicle equipped with the transmission according to Embodiment 1. A vehicle 100 shown in FIG 1 is a Front engine Front drive (FF) vehicle, but the vehicle carrying the transmission in accordance with the invention is not limited to the FF vehicle.

The vehicle 100 is a clutch pedal-less vehicle in which the desired shifting stage is formed by operating with an actuator a clutch and a normally-meshed gear transmission with six forward shifting stages and one rear shifting stage of a system identical to that of the manual transmission of the related art. In the vehicle 100, it is possible to select an auto shift mode in which upshifting and downshifting are performed based on a map established by the vehicle speed and throttle opening degree and a manual shift mode in which a driver can select any gear stage by respective operations. In the auto shift mode, a sports mode can be selected in which shifting is performed at an engine revolution speed that is higher than usual.

The vehicle 100 is provided with an engine 200, a clutch 300, a transmission 400 as the transmission of the present embodiment, a differential gear (abbreviated hereinbelow as "def") 500, and an ECU (Electronic Control Unit) 600.

The engine 200 is an internal combustion engine is which pistons are pushed down and a crankshaft 202 is rotated by combustion of a mixture of fuel and air inside the cylinders. The engine 200 is installed as a drive power source at the vehicle 100. The drive power from the engine 200 enables the vehicle 100 to travel. Another power source such as a motor can be installed instead of the engine 200 as a drive power source on the vehicle 100.

The clutch 300 is a friction clutch of a drive single-plate system. A clutch disk disposed at a clutch output shaft 302 is pressed against a flywheel mounted on the crankshaft 202 of the engine 200, thereby connecting the clutch 300.

The transmission 400 includes an input shaft 402 as a drive shaft, an output shaft 404 as a driven shaft, and a housing 60. The transmission 400 is accommodated together with the def 500 inside the housing 60. The transmission 400 is a normally-meshed gear transmission. The input shaft 402 and output shaft 404 are parallel to each other.

Shifting gear pairs 410 to 415 of a plurality of stages with different gear ratios and a reverse gear pair 416 are disposed between the input shaft 402 and output shaft 404. Of the two gears constituting each shifting gear pairs, one gear is provided at the input shaft 402 and the other gear is provided at the output shaft 404. Further, of the two gears constituting each shifting gear pair, one can freely rotate with respect to the provided shaft, and the other rotates integrally with the shaft. The two gears constituting each shifting gear pair are normally meshed.

Corresponding clutch gears 420 to 425 are provided for each shifting gear pair 410 to 415. Synchro mesh mechanisms 431 to 433 that synchronize the rotation speed of the shaft and the rotation speed of the clutch gears 420 to 425 and couple the shaft to gears are provided between the shaft and clutch gears 420 to 425. One of the clutch gears 420 to 425 is coupled to the shaft by one of the synchro mesh mechanisms 431 to 433, thereby establishing one of the first to sixth gear stages. In the transmission 400, a shifting operation is performed by converting the rotation speed of the input shaft 402 and transmitting the rotation to the output shaft 404 by switching the coupling state of the shifting gear pairs 410 to 415 of a plurality of stages. Where none of the clutch gears is coupled to the shaft, the transmission 400 is in a neutral state.

The reverse gear pair 416 is meshed with a reverse idler gear disposed on a countershaft (not shown in the figure). The reverse gear stage is established by meshing the reverse gear pair 416 with the reverse idler gear.

The synchro mesh mechanisms 431 to 433 are actuated by a shift & select actuator 110 controlled by the ECU 600 via fork shafts 51 to 53. The shift & select actuator 110 is enclosed in the housing 60. FIG 1 shows the fork shaft 53 that actuates the synchro mesh mechanism 431 that is a synchro mechanism for fifth speed - sixth speed; fork shafts 51, 52 are not shown in the figure. The synchro mesh mechanisms 431 to 433 are key-type synchro mesh mechanisms. Double-cone synchro mesh mechanisms may be also used instead of the key-type synchro mesh mechanisms.

The input shaft 402 is coupled to a clutch output shaft 302 of the clutch 300 by a spline 450 and rotates upon receiving a drive power from the engine 200. An output gear 460 is installed at the output shaft 404, and the output gear 460 is meshed with a ring gear 502 of the def 500. The def 500 includes a pair of side gears 504, 506. Respective drive shafts 508, 510 are coupled by spline fitting or the like to the side gears 504, 506. The power is transmitted to left and right front wheels 512, 514 via the drive shafts 508, 510.

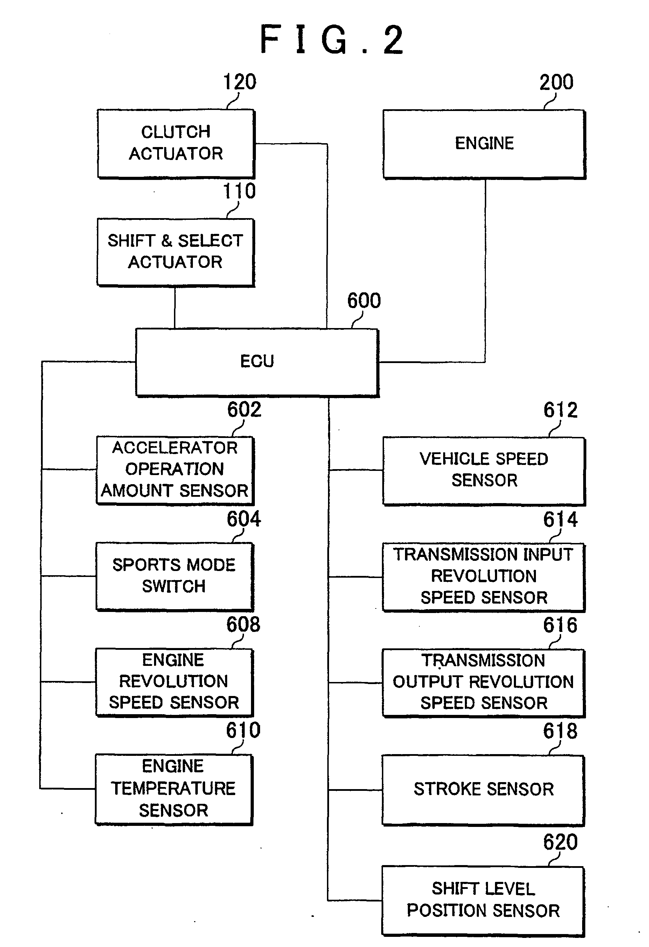

FIG 2 is a control block diagram of the vehicle shown in FIG 1. As shown in FIGS. 1 and 2, an accelerator operation amount sensor 602, a sports mode switch 604, an engine revolution speed sensor 608, an engine temperature sensor 610, a vehicle speed sensor 612, a transmission input revolution speed sensor 614, a transmission output revolution speed sensor 616, a stroke sensor 618, and a shift level position sensor 620 are connected to the ECU 600.

The accelerator operation amount sensor 602 detects an accelerator depression amount and sends a signal representing the detection results to the ECU 600. The sports mode switch 604 performs shifting to an engine revolution speed that is higher than usual and is operated by the driver when the driver wishes to travel in a sports mode in which acceleration ability is emphasized.

The engine revolution speed sensor 608 detects the revolution speed of the engine 200 and sends a signal representing the detection result to the ECU 600. The engine temperature sensor 610 detects the temperature of the engine 200 and sends a signal representing the detection result to the ECU 600. The vehicle speed sensor 612 detects the speed of the vehicle 100 from the rotation speed of the drive shaft 508 and sends a signal representing the detection result to the ECU 600.

The transmission input revolution speed sensor 614 detects the revolution speed of the input shaft 402 and sends a signal representing the detection result to the ECU 600. The transmission output revolution speed sensor 616 detects the revolution speed of the output shaft 404 and sends a signal representing the detection result to the ECU 600. The stroke sensor 618 detects the stroke amount of the shift & select actuator 110 (the movement amount of a sleeve of the synchro mesh mechanisms 431 to 433 or fork shafts 51 to 53) and sends a signal representing the detection result to the ECU 600.

The ECU 600 controls various devices so as to obtain the desired travel state of the vehicle 100 on the basis of the signals sent from these sensors and a throttle opening sensor (not shown in the figure) and also a map and a program stored in a Read Only Memory (ROM).

The shift & select actuator 110 and clutch actuator 120 are also connected to the ECU 600. The shift & select actuator 110 and clutch actuator 120 are controlled by the ECU 600.

The shift & select actuator 110 is a unit component having, for example, an electric motor for shift operation, an electric motor for select operation, reduction gears (a shift gear and a select gear), a shift stroke sensor, and a select stroke sensor as the principal structural components. The shift & select actuator 110 implements shift operations and select operations via the reduction gears when driven by the motors. In the shift operation, a shift load of the transmission 400 is controlled by a motor output. The shift speed and shift stroke are controlled by feedback control using stroke sensor signals detected by the stroke sensor 618.

The clutch actuator 120 is a unit component having, for example, an electric motor for clutch operation, a reduction worm gear, and assist spring, and a clutch stroke sensor as the principal structural components. The clutch actuator 120 engages and disengages the clutch via the reduction gear when driven by the motor. In order to reduce the motor load and size, the assist spring corresponding to a clutch cover release load is set. The engagement control and disengagement control of the clutch are implemented by conducting feedback control using stroke sensor signals detected by the clutch stroke sensor.

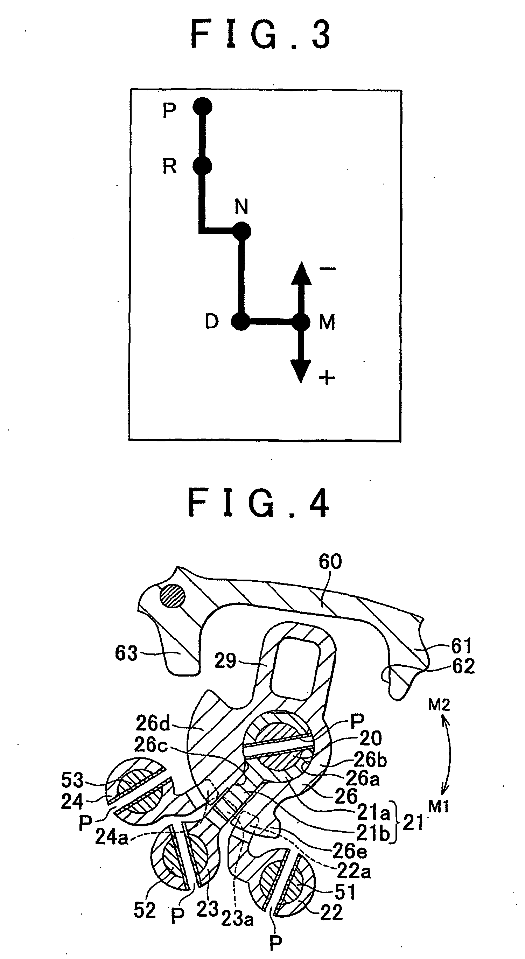

FIG. 3 is a schematic diagram illustrating a shift pattern in the vehicle shown in FIG. 1. The shift pattern shown in FIG. 3 is a shift pattern for a right handle. A shift pattern for a left handle is left-right symmetrical thereto. According to the shift pattern shown in FIG. 3, the driver can select a parking position (P position), a rear drive position (R position), a neutral position (N position), an automatic shifting position (D position), a manual shifting position (M position), and upshift (+) and downshift (-) in the M position. The driver operates the shift lever 606 so as to select the desired position in the shift pattern shown in FIG. 3.

The driver can select a manual shift mode in which any gear stage can be selected by operating the shift lever 606. Operations with manual shifting feel can be conducted by switching the shift lever to the M position set to the side of the D position and then conducting upshifting (+) by pulling the shift lever back or downshifting (-) by pushing the shift lever forward. When the driver pulls the shift lever back, a shift signal (UP) is inputted to the ECU, and when the driver pushes the shift lever forward, a shift signal (DOWN) is inputted to the ECU. When the driver removes the hand from the shift lever, the shift lever returns to the M position, which is a neutral position.

Where the driver sets the shift lever 606 to the D position, the transmission 400 is controlled in an automatic switching mode, rather than in the manual shifting mode.

The position of the shift lever 606 in the shift pattern shown in FIG 3 is detected by a shift lever position sensor 620 shown in FIG. 2 and inputted to the ECU 600. The ECU 600 controls the shift & select actuator 110 on the basis of this input signal. Further, in a case where the start control or shifting control is actually executed, the ECU 600 controls the clutch actuator 120, thereby automating the clutch operation.

A select-shift mechanism will be described below. This mechanism serves to transmit the drive power of the shift & select actuator 110 to the synchro mesh mechanisms 431 to 433 or reverse idler gear in a selective mode, switch the meshing state of a plurality of shift gear pairs contained in the transmission 400, and establish a shift stage from among the forward first speed stage to forward sixth speed stage and reverse stage.

FIG. 4 is a cross-sectional view (from an axial direction of the shift select shaft) of each engagement portion for a forward stage and periphery thereof in the select-shift mechanism. As shown in FIG 4, a shift select shaft 20, which slides in the axial direction and rotates about the axis when drive power is transmitted from the shift & select actuator 110, is accommodated inside the housing 60. The shift select shaft 20 is supported by the housing 60 so that the shift select shaft can rotate about the axis thereof and move reciprocatively in the axial direction.

A shift inner lever 21 that has a cylindrical portion (base portion) 21a that is fitted externally on the outer circumference of the shift select shaft 20 and an arm portion 21b that is provided in a connection arrangement with the cylindrical portion 21a is fixed to the shift select shaft 20. An orifice into which the shift select shaft 20 can be received is formed in the cylindrical portion 21a. The arm portion 21b extends in the radial direction of the shift select shaft 20. The shift inner lever 21 is fixed to the shift select shaft 20 so that the two components can rotate integrally and slide integrally by a joining pin P inserted from the shift select shaft 20 along the cylindrical portion 21a, and the shift inner lever 21 moves together with the shift select shaft 20 in the axial direction of the shift select shaft 20 and around the axis thereof.

An interlock plate 26 is fitted externally on the cylindrical portion 21a of the shift inner lever 21. The interlock plate 26 is provided so that it can rotate about the axis with respect to the shift select shaft 20, so that it can move along the axial direction relative to the shift inner lever 21 but cannot rotate about the axis relative to the shift inner lever 21, and so that it cannot move in the axial direction of the housing 60. The interlock plate 26 is provided with a cylindrical portion 26b having formed therein a through hole 26a into which the cylindrical portion 21a of the shift inner lever 21 can be received and guiding portions 26d, 26e that control the movement direction of the shift inner lever 21 around the axis of the shift select shaft 20. The guiding portions 26d, 26e are positioned at both sides of the arm portion 21b.

In the interlock plate 26, an engagement piece passage 26c composed of a pair of mutually opposing guiding surfaces that slide in contact with both sides of the arm portion 21b in the rotating direction about the axis of the shift select shaft 20 is formed so as to extend in the radial direction of the shift select shaft 20. The arm portion 21b can slide in the axial direction of the shift select shaft 20 along the engagement piece passage 26c, which is a gap established by the guiding portions 26d, 26e.

Fork shafts 51, 52, 53 that are disposed correspondingly to the synchro mesh mechanisms 433, 432, 431, respectively, are disposed parallel to the shift select shaft 20 at a distance from the shift select shaft 20. The fork shafts 51, 52, 53 are supported by the housing 60 so that the fork shafts can be displaced in the axial direction. Engagement portions 22, 23, 24 for forward stages that have heads 22a, 23a, 24a are disposed at the fork shafts 51, 52, 53, respectively.

In other words, the engagement portion 22 for forward stages for the first speed to second speed is provided at the fork shaft 51 for the first speed to second speed, the engagement portion 23 for forward stages for the third speed to fourth speed is provided at the fork shaft 52 for the third speed to fourth speed, and the engagement portion 24 for forward stages for the fifth speed to sixth speed is provided at the fork shaft 53 for the fifth speed to sixth speed. The respective pins P are inserted from the fork shafts 51, 52, 53 along the engagement portions 22, 23, 24 for forward stages. The engagement portions 22, 23, 24 for forward stages are integrally coupled to the fork shafts 51, 52, 53 so that the engagement portions for forward stages can slide in the axial direction of the fork shafts 51, 52, 53.

The arm portion 21b can be engaged with the heads 22a, 23a, 24a. Each pair of heads (engagement pieces for forward stages) 22a, 23a, 24a sandwiches a rotation path of the arm portion 21b of the shift inner lever 21 and is disposed at both sides of the axial direction of the shift select shaft 20. The heads 22a, 23a, 24a are disposed in positions in which they can be selectively engaged with the arm portion 21b in response to the rotation of the interlock plate 26 about the axis. The selected head 22a, 23a, 24a is engaged with the arm portion 21b and moves in the axial direction of the shift select shaft 20.

The gap between the guiding surfaces of the engagement piece passage 26c is set such as to restrict the simultaneous passage of a plurality of heads 22a, 23a, 24a, that is, to allow the passage of only one head 22a (23a, 24a).

A rib 61 for reinforcement is formed at the inner surface of the housing 60. The interlock plate 26 that is attached to the shift select shaft 20 is provided with a stopper 29. A stopper surface 62 is formed at the surface of the rib 61 that faces the stopper 29 so that the stopper 29 can abut against the stopper surface 62.

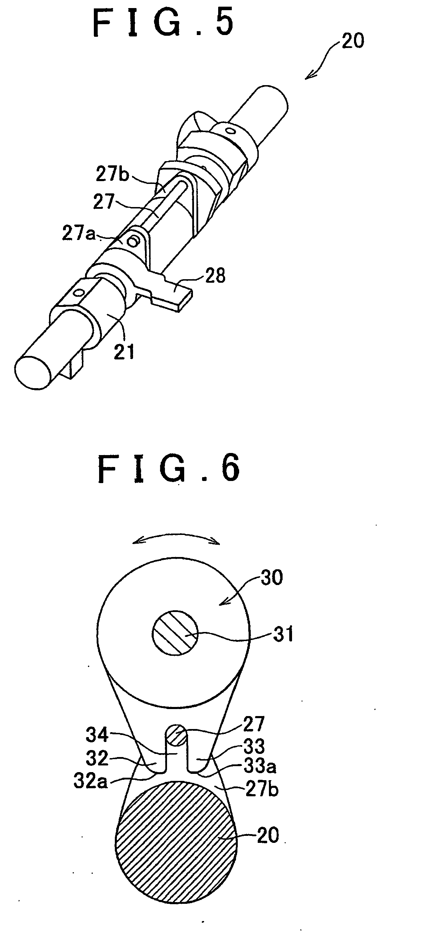

FIG. 5 is a perspective view of the shift select shaft. As shown in FIG 5, the shift inner lever 21 and a reverse lever 28 are formed at the shift select shaft 20 so as to protrude radially outward. Furthermore, a pair of lever support portions 27a, 27b that are arranged to protrude radially outward are also formed at the shift select shaft 20. A select inner lever 27 is provided along the axial direction of the shift select shaft 20 so as to couple the lever support portions 27a, 27b. The select inner lever 27 and lever support portions 27a, 27b are included in a lever unit. The lever unit is formed to protrude from the outer circumferential surface of the shift select shaft 20.

The select inner lever 27 is provided as an engagement portion that will engage with the shift & select actuator 110. When the select inner lever 27 engages with the shift & select actuator 110 and performs a select operation that causes the shift select shaft 20 to rotate about the axis thereof, the select inner lever acts as an interface part that transmits the rotation drive power from the shift & select actuator 110 to the shift select shaft 20. In FIG 5, the interlock plate 26 shown in FIG 4 is omitted.

FIG 6 is a partial cross-sectional schematic view illustrating an example of the engagement state of the shift select shaft and select gear. The shift & select actuator 110 is configured to include the select gear 30 shown in FIG. 6. The select gear 30 is provided as a drive portion that engages with the select inner lever 27 and drives the shift select shaft 20. The shift & select actuator 110 transits the drive power to the shift select shaft 20 via the select gear 30 and conducts a select operation with respect to the shift select shaft 20, that is, causes the shift select shaft 20 to rotate about the axis.

The select gear 30 is provided with an axial portion 31 and a pair of hook portions 32, 33 that protrude radially outward with respect to the axial portion 31. The hook portions 32, 33 are formed as a plate for which the direction perpendicular to the sheet surface in FIG 6 is a thickness direction. Part of the plate is cut out and a concave portion 34 for engagement with the select inner lever 27 is formed between the hook portions 32, 33. The concave portion 34 is cut out and formed so as to recede from distal end portions 32a, 33a of the hook portions 32, 33 toward the axial portion 31. The select inner lever 27 is inserted into the concave portion 34. The concave portion 34 is formed to have a shape such that the select inner lever 27 can be inserted.

After the shift & select actuator 110 has been installed inside the housing 60, the select gear 30 can rotate about the axial portion 31. The select gear 30 is supported so that it can rotate about the axial portion 31, as shown by a curved arrow in FIG 6. Following the rotation of the select gear 30, the shift select shaft 20 rotates about the axis. The shift & select actuator 110 transmits the power of rotation about the axis to the select inner lever 27 via the select gear 30.

In the select-shift mechanism, the shift & select actuator 110 is coupled to the shift select shaft 20 so as to enable the transmission of drive power that will move the shift select shaft 20 during the shifting operation. The select gear 30 is coupled to the select inner lever 27. The select operation power of the shift & select actuator 110 is received by the select inner lever 27 via the select gear 30 and a power of rotation about the axis is provided to the shift select shaft 20.

Following the rotation of the select inner lever 27, the interlock plate 26 rotates about the axis of the shift select shaft 20. The shift select shaft 20 is provided so that it can rotate about the axis when an operation force in the select direction is received from the shift & select actuator 110. Because of the rotation of the interlock plate 26, the shift inner lever 21 is pushed by the guiding portions 26d, 26e of the interlock plate 26 and rotates about the axis of the shift select shaft 20. Because of the rotation of the shift inner lever 21, the arm portion 21b is positioned so that it can be selectively engaged with any of the heads 22a, 23a, 24a that are disposed adjacently to each other along both sides of the rotation path of the arm portion 21b. A select operation is thus conducted.

The shift & select actuator 110 also transmits an axial slide movement force to the shift select shaft 20 via a shift gear (not shown in the figure). The shift select shaft 20 is provided so that it can move reciprocatively along the axial direction upon receiving an operation force in the shift direction from the shift & select actuator 110. Following the displacement of the shift select shaft 20 in the axial direction, in a state in which one of the heads 22a, 23a, 24a is selectively engaged with the arm portion 21b, the selected engagement portion 22, 23, 24 for a forward stage and the fork shaft 51, 52, 53 shift in the axial direction. A shift operation is thus conducted.

The shift select shaft 20 to which the drive power has been transmitted from the shift & select actuator 110 during shifting to the forward stage conducts a select operation of rotating about the axis (direction shown by arrows M1 to M2 in FIG. 4) and is placed in a rotation position corresponding to the drive power transmitted from the shift & select actuator 110. Furthermore, the shift select shaft 20 conducts a shift operation of sliding reciprocatively in the axial direction (direction perpendicular to the sheet surface in FIG. 4) and is placed in a slide position corresponding to the drive power transmitted from the shift & select actuator 110.

Due to the select operation and shift operation of the shift select shaft 20, the meshed state of a plurality of shifting gear pairs 410 to 415 is switched and shifting is performed. The shift & select actuator 110 moves the shift select shaft 20 during shifting. FIG 4 shows the rotation position of the shift select shaft 20 and shift inner lever 21 at a time when the shift select shaft 20 is disposed in the third speed - fourth speed select position and the arm portion 21b is engaged with the head 23a.

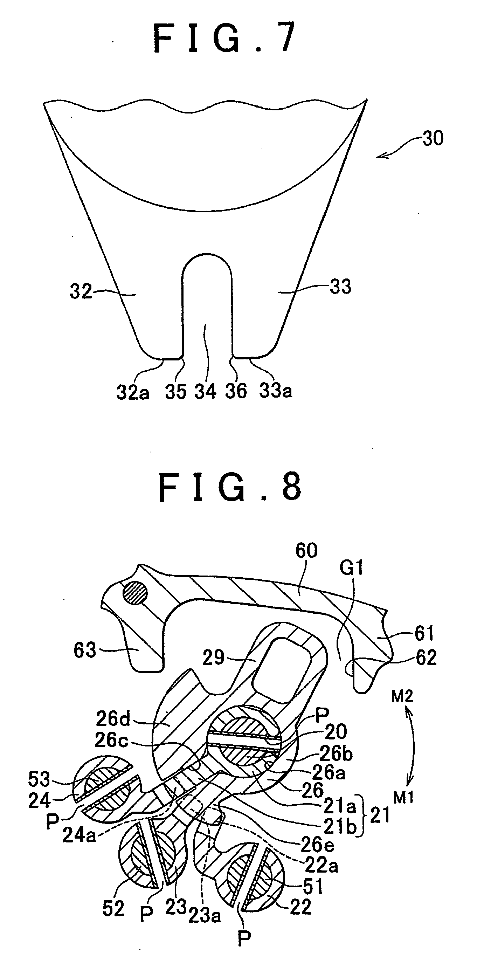

FIG. 7 is an enlarged schematic view illustrating the vicinity of the distal end portions of hook portions of the select gear. As shown in FIG 7, chamfer portions 35, 36 that are produced by chamfering are formed at the peripheral edge portions of the concave portion 34 at the distal end portions 32a, 33a of the hook portions 32, 33. In the select gear 30 of the present embodiment, the chamfer portions 35, 36 are formed by R processing the peripheral edge portions of the concave portion 34. The chamfer portions 35, 36 can be formed by cutting the peripheral edge portions of the concave portion 34 to any shape, for example, by chamfering at an angle of 45°.

The arrangement of the shift select shaft 20 when shifting is conducted and installation of the shift & select actuator 110 is performed will be explained below. FIG. 8 is a cross-sectional schematic drawing illustrating a state in which the shift select shaft 20 is disposed in the fifth speed - sixth speed select position. In FIG 8, the arm portion 21b of the shift inner lever 21 is engaged with the head 24a of the engagement portion 24 for forward stages for the fifth speed - sixth speed, and the fork shaft 53 for the fifth speed - sixth speed is selected so as to enable the transmission of the shifting power of the shift & select actuator 110.

Where the shift & select actuator 110 causes the shift select shaft 20 to slide in the axial direction from this state, a shift fork (not shown in the figure) that is fixed to the fork shaft 53 moves in the axial direction of the shift select shaft 20. As a result, the synchro mesh mechanism 431 is actuated, either of the clutch gears 420, 421 is coupled to the shaft, and a fifth speed or sixth speed gear stage is established.

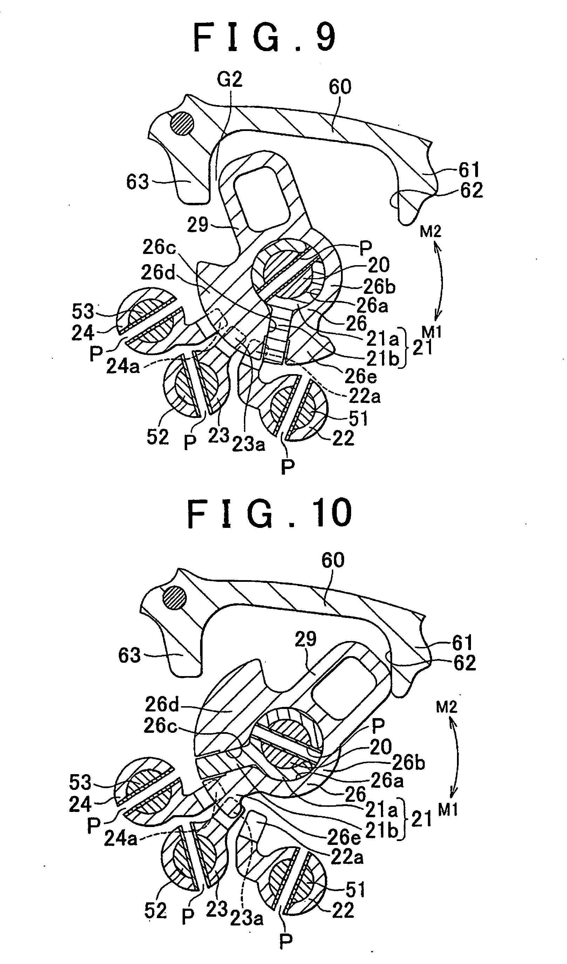

FIG 9 is a cross-sectional schematic view illustrating the state in which the shift select shaft 20 is disposed in a reverse select position. FIG 9 shows the arrangement of the shift select shaft 20 in a case where the reverse stage is selected (that is, when the shift lever 606 is placed in the R position shown in FIG 3). In this case, the shift inner lever 21 is not engaged with any of the heads 22a, 23a, 24a, but the reverse lever 28 (see FIG 5) is engaged with the reverse shift fork (not shown in the figure), moves the reverse idler gear in the axial direction of the countershaft and meshes the reverse idler gear with the reverse gear pair 416, and establishes the reverse stage.

FIG 8 shows the arrangement of the interlock plate 26 in a case where the shift select shaft 20 has turned to the end in the M1 direction during shifting of the transmission 400 of the vehicle 100. In this case, a gap G1 is formed between the stopper 29 formed at the interlock plate 26 and the stopper surface 62 that faces the stopper 29 in the rib 61 of the housing 60. FIG 9 shows the arrangement of the interlock plate 26 in a case where the shift select shaft 20 has turned to the end in the M2 direction during shifting. In this case, a gap G2 is formed between the stopper 29 and the rib 63 of the housing 60.

In other words, when the usual shifting of the transmission 400 is performed, the shift select shaft rotates within the range shown in FIGS. 8 and 9. The stopper 29 formed at the interlock plate 26 also rotates together with the shift select shaft 20 around the axis. During usual shifting, the stopper 29 is not in contact with the housing 60, and the shift select shaft 20 is disposed inside the housing 60 so that the housing 60 does not hinder the select operation of the shift select shaft 20.

FIG. 10 is a cross-sectional schematic view illustrating the arrangement of the shift select shaft when the shift & select actuator is installed. The shift select shaft 20 shown in FIG. 10 has rotated further in the M1 direction from the position shown in FIG. 8. In FIG 10, the shift inner lever 21 is not engaged with the heads 22a, 23a, 24a, and the reverse lever 28 is also not engaged with the reverse shift fork. Thus, the shift select shaft 20 is disposed in a position outside the shift movable range in which it can move during the usual shifting.

In this case, the stopper 29 formed at the interlock plate 26 that has been attached to the shift select shaft 20 abuts against the stopper surface 62 of the rib 61 formed at the housing 60. Because the stopper 29 is in contact with the stopper surface 62, the stopper is held and positioned by the housing 60 so that the shift select shaft 20 cannot rotate in the M1 direction. The stopper 29 abuts against the stopper surface 62 of the housing 60 and prevents the shift select shaft 20 from rotating in the M1 direction.

The shift select shaft 20 is stopped inside the housing 60 when the stopper 29 abuts against the stopper surface 62 formed in the housing 60. Therefore, it is not necessary to provide separately a positioning mechanism such as a lock ball and positioning can be performed in the select direction (that is, circumferential direction around the axis of the shift select shaft 20) of the shift select shaft 20.

The stopper surface 62 against which the stopper 29 abuts is formed in a position outside the shaft movable range in which the shift select shaft 20 can rotate during shifting and so as to stop the shift select shaft 20. As a result, when shifting of the transmission 400 is performed, the shift select shaft 20 can be moved smoothly, without the stopper surface 62 hindering the movement of the shift select shaft 20. The stopper surface 62 is formed by smoothly machining the surface of the rib 61 that is also provided in related art with the object of increasing the strength of the housing 60 and reducing noise and vibrations. Therefore, it is not necessary to add and attach a new part to the housing 60 in order to form the stopper surface 62, and increase in the production cost of the transmission 400 can be inhibited.

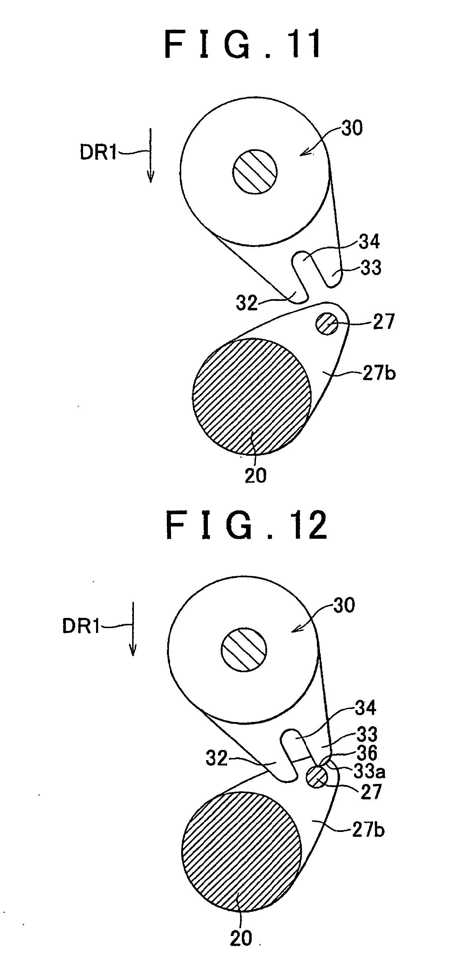

A process of installing the shift & select actuator 110 inside the housing 60 in a state in which the stopper 29 is abutted against the stopper surface 62 and the movement of the shift select shaft 20 is restricted will be described below. FIGS. 11 to 14 are partial cross-sectional schematic views illustrating the process of installing the shift & select actuator of Embodiment 1. The shift select shaft 20 shown in FIG. 11 is in a state in which the stopper 29 abuts against the stopper surface 62 and the shaft is positioned in the direction around the axis and stopped. In this state, the shift & select actuator 110 is moved in the DR1 direction shown by a straight arrow in FIG 11, and the hook portions 32, 33 of the select gear 30 are brought close to the select inner lever 27.

Where the shift & select actuator 110 is further moved in the DR1 direction, the select inner lever 27 comes into contact with the chamfered portion 36 formed at the circumferential edge of the concave portion 34, as shown in FIG 12. The chamfered portion 36 is obtained, as described above, by chamfering. The chamfered portion 36 has a shape that enables the select inner lever 27 that is in contact with the chamfered portion 36 to slide against the chamfered portion 36.

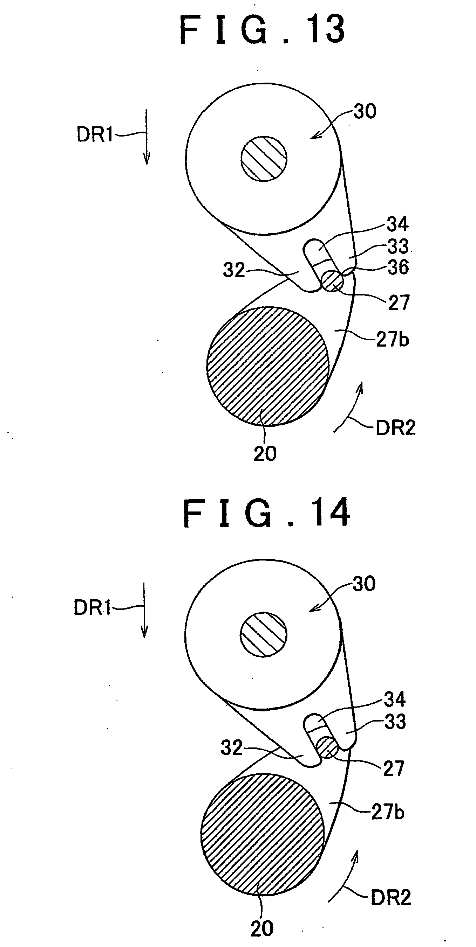

Therefore, as shown in FIG. 13, where the shift & select actuator 110 is further moved in the DR1 direction, the select inner lever 27 slides against the chamfered portion 36, and the select inner lever 27 moves relative to the select gear 30 from the distal end 33a side of the hook portion 33 to the inside of the concave portion 34. Following this sliding movement of the select inner lever 27, the shift select shaft 20 rotates counterclockwise in the DR2 direction (that is, M2 direction shown in FIG. 10) shown by the curved arrow in FIG. 13.

FIG 14 shows a state in which the shift & select actuator 110 is disposed in an original installation position inside the housing 60. As the shift & select actuator 110 moves in the DR1 direction, the select inner lever 27 is inserted into the concave portion 34 due to the force acting from the shift & select actuator 110 upon the shift select shaft 20 (installation force of the shift & select actuator 110). The shift & select actuator 110 picks up the shift select shaft 20 by the chamfered portion 36, and the select inner lever 27 is accommodated in a two-surface width (that is, opposite side dimension of the hook portions 32, 33) of the select gear 30. As a result, the shift select shaft 20 rotates in the DR2 direction about the axis and the shift select shaft 20 moves into the shaft movable range in which the shaft can move during usual shifting.

The shift & select actuator 110 is thus installed inside the housing 60. At the same time, by matching the position and phase of the shift & select actuator 110 with respect to the shift select shaft 20 in a stationary state, it is possible to engage easily the shift & select actuator 110 with the shift select shaft 20 and move the shift select shaft 20 into the shaft movable range.

The chamfered portion 36 may be formed so that the select inner lever 27 can slide with a little friction resistance along the chamfered portion 36 and so that the shift select shaft 20 that has been stopped in the position outside the shaft movable range by the stopper 29 abutting against the stopper surface 62 can rotate about the axis and move into the shaft movable range. Where the chamfer size is small, the select inner lever 27 does not slide against the chamfered portion 36 and it may be difficult to move the shift select shaft 20 into the shaft movable range. Further, the chamfered portions 36 have to be formed so that the select gear 30 and shift select shaft 20 do not disengage during normal shifting. Where the chamfer size is too large, the select inner lever 27 can escape from the concave portion 34 when the select gear 30 rotates about the axial portion 31. For example, the chamfered portion 36 can be formed to a circular arc shape with a radius of 1 mm with respect to a select inner lever 27 in the form of a round rod with a diameter of 5 mm.

As described above, the transmission 400 of the present embodiment is provided with the shift select shaft 20, shift & select actuator 110, and housing 60. The meshing state of shift gear pairs 410 to 415 is switched and shifting is established where the shift select shaft 20 moves reciprocatively in the axial direction and rotates about the axis. The shift & select actuator 110 moves the shift select shaft 20 during shifting. The housing 60 accommodates the shift select shaft 20 and shift & select actuator 110.

The shift select shaft 20 includes the stopper 29 that abuts against the housing 60 and restricts the movement of the shift select shaft 20. The housing 60 includes the stopper surface 62 against which the stopper 29 abuts. The stopper surface 62 is formed in a position outside the shift movable range in which the shift select shaft 20 can move during shifting.

Thus, by causing the stopper 29 provided at the shift select shaft 20 to abut against the stopper surface 62 formed at the housing 60, thereby restricting the movement of the shift select shaft 20, it is possible to match easily the positions and phases of the shift & select actuator 110 and shift select shaft 20. Therefore, the shift & select actuator 110 can be easily engaged with the shift select shaft 20 and installed inside the housing 60.

Further, the shift select shaft 20 has a lever portion that protrudes from the outer circumferential surface of shift select shaft 20. The lever portion includes the select inner lever 27 and lever support portions 27a, 27b. The concave portion 34 into which the select inner lever 27 can be inserted is formed at the shift & select actuator 110. When the shift & select actuator 110 is installed inside the housing 60, the select inner lever 27 is inserted into the concave portion 34 in a state in which the stopper 29 is in contact with the stopper surface 62 and the shift select shaft 20 is stopped, thereby rotating the shift select shaft 20 about the axis and moving it into the shaft movable range.

By so matching the position and phase of the shift & select actuator 110 against those of the shift select shaft 20, it is possible to engage the shift & select actuator 110 reliably with the shift select shaft 20 and install the shift & select actuator inside the housing 60.

When the shift & select actuator 110 is installed inside the housing 60, the select inner lever 27 comes into contact with the circumferential edge portion of the concave portion 34, slides against the circumferential edge portion, and is inserted into the concave portion 34. As a result, the select inner lever 27 can be inserted into the concave portion 34 by using a force acting when the shift & select actuator 110 is installed from the shift & select actuator 110 upon the shift select shaft 20 that is in a position outside the shaft movable range.

The chamfered portions 35, 36 that are produced by chamfering are formed at the circumferential edge portion of the concave portion 34. Thus, the select inner lever 27 can be easily caused to slide against the chamfered portions 35, 36 and can be inserted into the concave portion 34.

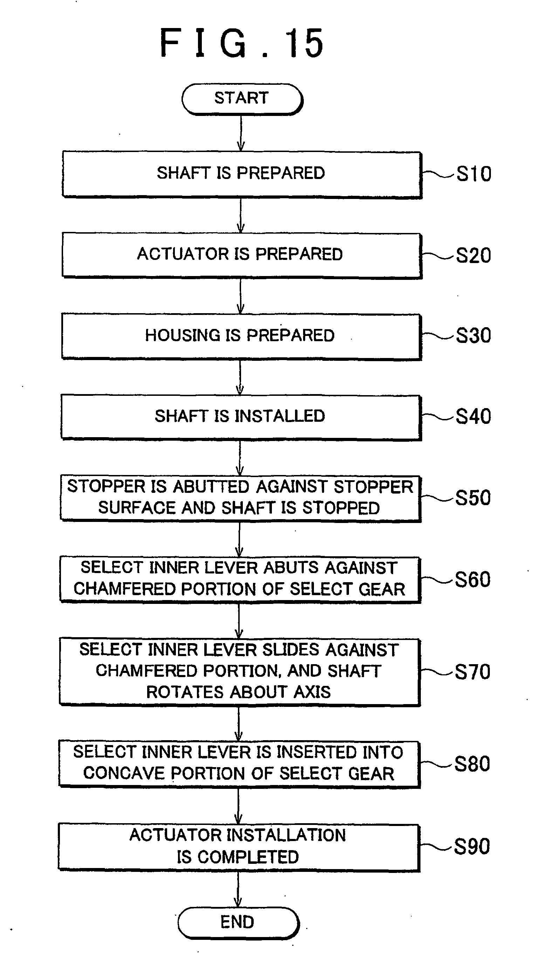

A method for manufacturing the transmission of Embodiment 1 will be described below. FIG 15 is a flowchart illustrating a method for manufacturing the transmission of Embodiment 1. As shown in FIG 15, first, in step (S10), the shift select shaft 20 shown in FIG 5 is prepared. In step (S20), the shift & select actuator 110 provided with the select gear 30 is prepared. In step (S30), the housing 60 is prepared. The shift select shaft 20, shift & select actuator 110, and housing 60 are produced using appropriately any plastic processing such as forging or any casting process. The shift select shaft 20 is provided with the select inner lever 27 and stopper 29. The stopper surface 62 is formed at the housing 60.

Then, in step (S40), the shift select shaft 20 is installed inside the housing 60. The shift select shaft 20 is supported by the housing 60 and installed inside the housing 60 so that the shift select shaft can move reciprocatively in the axial direction and rotate about the axis. Then, in step (S50), the stopper 29 formed at the shift select shaft 20 is abutted against the stopper surface 62 formed at the housing 60, and the shift select shaft 20 is stopped inside the housing 60.

Then, in step (S60), the shift & select actuator 110 is moved in the DR1 direction shown in FIG 11 and brought close to the shift select shaft 20, and the select inner lever 27 is abutted against the chamfered portion 36 of the select gear 30, as shown in FIG. 12. In step (S70), the shift & select actuator 110 is further moved in the DR1 direction. In this case, the select inner lever 27 slides against the chamfered portion 36 and the shift select shaft 20 rotates in the DR2 direction about the axis, as shown in FIG. 13.

Where the shift & select actuator 110 is then further moved in the DR1 direction in step (S80), the shift select shaft 20 rotates in the DR2 direction, whereby the select inner lever 27 is inserted into the concave portion 34 formed between the hook portions 32, 33 of the select gear 30. The shift & select actuator 110 is thus engaged with the shift select shaft 20, the shift select shaft 20 is moved into the shaft movable range in which the shift select shaft can be moved during shifting, and the installation of the shift & select actuator 110 inside the housing 60 is completed (S90).

The above-described method for manufacturing the transmission of Embodiment 1 includes a step in which the stopper 29 provided at the shift select shaft 20 is abutted against the stopper surface 62 formed at the housing 60 in a position outside the shaft movable range in which the shift select shaft 20 can move during shifting, and the shift select shaft 20 is stopped inside the housing 60. A step is also provided in which the shift & select actuator 110 is engaged with the shift select shaft 20, and the shift & select actuator 110 is installed inside the housing 60, while moving the shift select shaft 20 into the shaft movable range.

Thus, the stopper 29 provided at the shift select shaft 20 is abutted against the stopper surface 62 formed at the housing 60 and the movement of the shift select shaft 20 is restricted, thereby matching the position and phase of the shift & select actuator 110 to those of the shift select shaft 20 that is in a stationary state. Therefore, the shift & select actuator 110 can be easily engaged with the shift select shaft 20 and installed inside the housing 60.

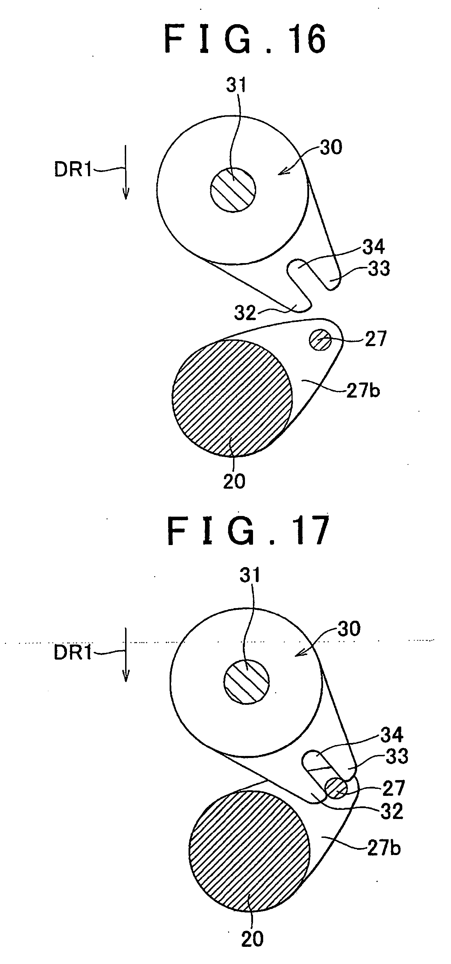

FIGS. 16 to 18 are partial cross-sectional views illustrating a process of installing a shift & select actuator of Embodiment 2. FIG. 16 shows a state in which the stopper 29 abuts against the stopper surface 62 and the shift select shaft 20 is positioned in the direction of rotation about the axis and stopped, as in Embodiment 1. By contrast, the position of the shift & select actuator 110 relative to the shift select shaft 20 is outside the actuator movable range in which the shift & select actuator can engage with the shift select shaft 20 and rotate about the axial portion 31 during normal shifting. By positioning the shift & select actuator 110 in an installation special position, which is a position in which the shift & select actuator can be disposed only during the installation, it is possible to facilitate the engagement of the shift & select actuator 110 with the shift select shaft 20.

More specifically, the select gear 30 mounted on the shift & select actuator 110 shown in FIG 16 is in a position in which the select gear is rotated counterclockwise about the axial portion 31 with respect to the select gear 30 shown in FIG. 11. In the select gear 30 shown in FIG 16, the depthwise direction of the concave portion 34 when the select gear 30 is brought close to the shift select shaft 20 forms a large inclination angle with respect to the DR1 direction (that is vertical direction in the figure), which is the movement direction of the shift & select actuator 110, than in the configuration shown in FIG 11.

In Embodiment 1, when the shift & select actuator 110 is moved in the DR1 direction for installation inside the housing 60, the select inner lever 27 comes into contact with the chamfered portion 36 formed at the hook portion 33, as shown in FIG. 12. By contrast, in Embodiment 2, when the shift & select actuator 110 is moved in the DR1 direction, the select inner lever 27 abuts inside the concave portion 34 of the select gear 30 and enters inside the concave portion 34 between the hook portions 32, 33, so as to be sandwiched between the hook portions 32, 33.

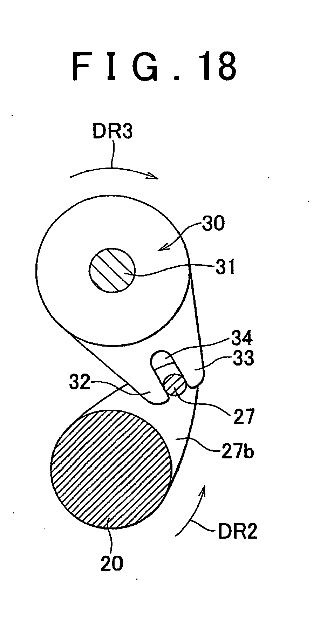

FIG 17 shows a state in which the shift & select actuator 110 is moved in the DR1 direction and the axial portion 31 is disposed in the original installation position inside the housing 60. In this case, the select inner lever 27 is in a state of being semi-inserted into the concave portion 34. Where the shift & select actuator 110 is rotated about the axial portion 31 in the DR3 direction (see FIG 18) from this state, the select inner lever 27 slides against the hook portions 32, 33 and moves into the concave portion 34. As a result, the shift select shaft 20 rotates in the DR2 direction, the select inner lever 27 is inserted into the concave portion 34, as shown in FIG 18, and the shift & select actuator 110 is disposed in the original installation position inside the housing 60.

The shift & select actuator 110 is thus installed inside the housing 60. In this case, the position and phase of the shift & select actuator 110 are matched to those of the shift select shaft 20, and the shift & select actuator 110 is positioned in an installation special position outside the actuator movable range. As a result, the shift & select actuator 110 can be easily engaged with the shift select shaft 20, and the shift select shaft 20 can be moved into the shaft movable range simultaneously with the installation of the shift & select actuator 110.

In Embodiment 2, when the shift & select actuator 110 is installed inside the housing 60, the shift & select actuator 110 is positioned in a position outside the actuator movable range in which the shift & select actuator 110 can move during shifting, and the select inner lever 27 is inserted into the concave portion 34. As a result, the position and phase of the shift & select actuator 110 can be matched to those of the shift select shaft 20 that is in a position outside the shaft movable range, and the shift & select actuator 110 can be installed inside the housing 60.

When the select inner lever 27 abuts against the select gear 30, the select inner lever comes into contact with the inside of the concave portion 34, rather than the distal end portions 32a, 33a of the hook portions 32, 33. As a result, it is not necessary to cause the select inner lever 27 to slide against the chamfered portion 36, as in Embodiment 1. Therefore, the shift & select actuator 110 can be installed even without forming the chamfered portions at the select gear 30, and the production cost of the select gear 30 can be greatly reduced.

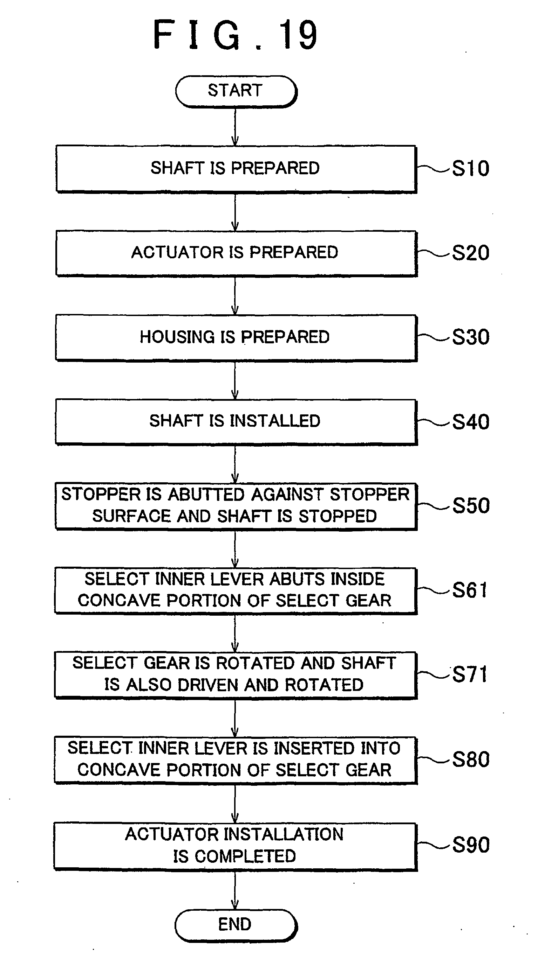

FIG. 19 is a flowchart illustrating a method for manufacturing the transmission of Embodiment 2. The method for manufacturing the transmission shown in FIG 19 differs from the method for manufacturing the transmission of Embodiment 1 illustrated by FIG. 15 in that steps (S61), (S71) are provided instead of steps (S60), (S70).

More specifically, in step (S50), the stopper 29 is abutted against the stopper surface 62, and the shift select shaft 20 is stopped inside the housing 60. Then, in step (S61), the shift & select actuator 110 is brought close to the shift select shaft 20. Then, as shown in FIG. 17, the select inner lever 27 is abutted against the inside of the concave portion 34 of the select gear 30.

Then, in step (S71), the select gear 30 is rotated in the DR3 direction shown in FIG 18, and the shift select shaft 20 is also driven and rotated in the DR2 direction, thereby inserting the select inner lever 27 into the concave portion 34 of the select gear 30. Other steps of the process illustrated by FIG 19 are identical to those of the manufacturing method of Embodiment 1 that is explained with reference to FIG 15, and the redundant explanation of these other steps is omitted.

In the above-described method for manufacturing the transmission of Embodiment 2, the stopper 29 formed at the shift select shaft 20 is also abutted against the stopper surface 62 formed at the housing 60 and the movement of the shift select shaft 20 is restricted, whereby the position and phase of the shift & select actuator 110 are matched to those of the shift select shaft 20 in a stationary state, in the same manner as in Embodiment 1. Therefore, the shift & select actuator 110 can be easily engaged with the shift select shaft 20 and installed inside the housing 60.

In the explanation of Embodiments 1 and 2, an example is explained in which the shift select shaft 20 is stopped in a position outside the shaft movable range, and the shift select shaft 20 is rotated about the axis and moved into the shaft movable range when the shift & select actuator 110 is installed. In the transmission in accordance with the invention, the shift & select actuator may be engaged with the shift select shaft stopped inside the housing when the shift & select actuator is installed, and the shift select shaft may be moved into the shaft movable range by moving along the axial direction. In other words, any configuration may be used, provided that the stopper surface is formed in a position that does not hinder the reciprocating movement of the shaft along the axial direction and rotation of the shaft about the axis during usual shifting and that the shaft is moved into the shaft movable range when the actuator is installed.

Further, in Embodiments 1 and 2, an example is explained, in which the stopper 29 is formed at the interlock plate 26 mounted on the shift select shaft 20, and the stopper surface 62 is formed at one surface of the rib 61 for reinforcement that is formed at the housing 60, but the invention is not limited to this example. Thus, the stopper and stopper surface can be formed in any positions, provided that a configuration is realized in which the stopper is provided at the shaft itself or a part fixed to the shaft, the stopper surface is formed inside the housing that will accommodate the shaft, and the stopper can abut against the stopper surface, thereby restricting the movement of the shaft. Thus, it is not necessary for the member where the stopper surface is formed to have a protruding shape such as that of the rib 61, or for the stopper surface to be provided on the reinforcing member, and the stopper surface can be formed at any member.

In Embodiments 1 and 2, the shift select shaft 20 is explained that performs a select operation of engaging the arm portion 21b with the heads 22a, 23a, 24a by rotation about the axis and performs a shift operation by displacing the fork shafts 51, 52, 53 by reciprocating movement in the axial direction. The transmission in accordance with the invention may be also provided with a shaft that performs a select operation by moving reciprocatively in the axial direction and performs a shift operation by rotating about the axis.

Further, in Embodiments 1 and 2, an example is explained in which the lever portion (select inner lever 27 and lever support portions 27a, 27b) is formed so as to protrude from the outer circumferential surface of the shift select shaft 20, and the concave portion 34 is formed at the select gear 30 so as to engage with the lever portion. The transmission in accordance with the invention may also have a configuration in which a protruding portion is provided at either of the actuator and shaft, a recess is provided at the other one, and the actuator is engaged with the shaft when the protruding portions is inserted into the recess.

The embodiments of the invention are described above, but the disclosed embodiments are merely exemplary embodiments and should not be construed as restrictive. The scope of the invention is represented by the claims, rather than by the explanation above, and includes equivalents of the claims and all the variations within the scope of the claims.

The invention can be applied to a transmission (the so-called Automated Manual Transmission (AMT) or Multi-mode Manual Transmission (MMT)) that includes an actuator linked to a shift change operation performed by the driver and in which shifting is performed with the actuator.

A transmission, in which installation of an actuator that is matched in position and phase can be easily conducted without providing a positioning mechanism, is provided with a shift select shaft (20) that establishes a shifting operation, a shift & select actuator that moves the shift select shaft (20) during shifting, and a housing (60) that encloses the shift select shaft (20) and the shift & select actuator. The shift select shaft (20) includes a stopper (29) that abuts against the housing (60) and restricts the movement of the shift select shaft (20). The housing (60) includes a stopper surface (62) against which the stopper (29) abuts. The stopper surface (62) is formed in a position outside a shaft movable range in which the shift select shaft (20) can move during shifting.

## Claims

1. A transmission which has a drive shaft (402) that rotates upon receiving a drive power from a drive source (200), and a driven shaft (404) disposed parallel to the drive shaft (402), and in which shifting is performed by converting a rotation speed of the drive shaft (402) and transmitting the rotation to the driven shaft (404) by switching shift gears (410, 411, 412, 413, 415) of a plurality of stages, including:
a shaft (20) that switches a meshing state of the shift gears (410, 411, 412, 413, 415) and establishes a shifting operation by moving reciprocatively in an axial direction and rotating about an axis;
an actuator (110) that moves the shaft (20) during shifting; and
a housing (60) that encloses the shaft (20) and the actuator (110), wherein
the shaft (20) includes a stopper (29) that abuts against the housing (60), and
the housing (60) includes a stopper surface (62) against which the stopper (29) abuts, and
the stopper (29) restricts the rotation of the shaft (20) about the axis,
**characterized in that**
the stopper surface (62) is formed in a position outside a shaft movable range in which the shaft (20) rotates about the axis during shifting.

2. The transmission according to claim 1, wherein
the shaft (20) has a lever portion (27) that protrudes from an outer circumferential surface of the shaft (20);
a concave portion (34) into which the lever portion (27) can be inserted is formed in the actuator (110); and
wherein a configuration is such that, when installed inside the housing (60), the actuator (110) can rotate the shaft (20) about the axis to move the shaft (20) into the shaft movable range by inserting the lever portion (27) into the concave portion (34) in a state in which the stopper (29) is in contact with the stopper surface (62) and the shaft (20) is stopped.

3. The transmission according to claim 2, wherein a configuration is such that, when the actuator (110) is installed inside the housing (60), the lever portion (27) can come into contact with a circumferential edge portion (36) of the concave portion (34), can slide along the circumferential edge portion (36) and can be inserted into the concave portion (34).

4. The transmission according to claim 3, wherein the circumferential edge portion (36) is chamfered.

5. The transmission according to claim 2, wherein a configuration is such that, when the actuator (110) is installed inside the housing (60), the actuator (110) can be positioned outside an actuator movable range in which the actuator (110) can move during shifting, to cause the lever portion (27) to be inserted into the concave portion (34).

6. A method for manufacturing a transmission which has a drive shaft (402) that rotates upon receiving a drive power from a drive source (200), and a driven shaft (404) disposed parallel to the drive shaft (402), and in which shifting is performed by converting a rotation speed of the drive shaft (402) and transmitting the rotation to the driven shaft (404) by switching shift gears (410, 411, 412, 413, 415) of a plurality of stages, the method comprising the following steps:
preparing a shaft (20) that switches a meshing state of the shift gears (410, 411, 412, 413, 415) and establishes a shifting operation by moving reciprocatively in an axial direction and rotating about an axis;
preparing an actuator (110) that moves the shaft (20) during shifting;
preparing a housing (60) that encloses the shaft (20) and the actuator (110);
**characterized by**
causing a stopper (29) that is provided at the shaft (20) to abut against a stopper surface (62) formed at the housing (60) in a position outside a shaft movable range in which the shaft (20) moves during shifting, and stopping the shaft (20) inside the housing (60); and
engaging the actuator (110) with the shaft (20), and installing the actuator (110) inside the housing (60), while moving the shaft (20) into the shaft movable range.

## Patentansprüche

1. Getriebe, das eine Antriebswelle (402), die bei Aufnahme einer Antriebsleistung von einer Antriebsquelle (200) dreht, und eine Abtriebswelle (404) hat, die parallel zu der Antriebswelle (402) angeordnet ist, und in dem ein Schalten durch Umwandeln einer Drehzahl der Antriebswelle (402) und Übertragen der Drehung auf die Abtriebswelle (404) durch Umschalten von Schalträdern (410, 411, 412, 413, 415) einer Vielzahl von Stufen durchgeführt wird, wobei das Getriebe folgendes hat:
eine Welle (20), die einen Eingriffszustand der Schalträder (410, 411, 412, 413, 415) umschaltet und eine Schaltbetätigung durch Hin- und Herbewegen in einer Axialrichtung und Drehen um eine Achse einrichtet;
ein Stellglied (110), das die Welle (120) während eines Schaltens bewegt; und
ein Gehäuse (60), das die Welle (20) und das Stellglied (110) umschließt, wobei
die Welle (20) einen Anschlag (29) hat, der an dem Gehäuse (60) anliegt, und
das Gehäuse (60) eine Anschlagfläche (62) hat, an der der Anschlag (29) anliegt, und
der Anschlag (29) die Drehung der Welle (20) um die Achse begrenzt,
**dadurch gekennzeichnet, dass**
die Anschlagfläche (62) in einer Position außerhalb eines Wellenbewegungsbereichs ist, in dem die Welle (20) während eines Schaltens um die Achse dreht.

2. Getriebe nach Anspruch 1, wobei
die Welle (20) einen Hebelabschnitt (27) hat, der von einer Außenumfangsfläche der Welle (20) vorsteht;
ein konkaver Abschnitt (34), in dem der Hebelabschnitt (27) eingesetzt werden kann, in dem Stellglied (110) ausgebildet ist; und
wobei eine Anordnung derart ist, dass, wenn das Stellglied (110) in dem Gehäuse (60) eingebaut ist, es die Welle (20) um die Achse bewegen kann, um die Welle (20) in den Wellenbewegungsbereich zu bewegen, und zwar durch Einsetzen des Hebelabschnitts (27) in den konkaven Abschnitt (34) in einem Zustand, in dem der Anschlag (29) mit der Anschlagfläche (62) in Kontakt ist und die Welle (20) gestoppt ist.

3. Getriebe nach Anspruch 2, wobei ein Aufbau derart ist, dass, wenn das Stellglied (110) im Inneren des Gehäuses (60) eingebaut ist, der Hebelabschnitt (27) mit einem Umfangsrandabschnitt (36) des konkaven Abschnitts (34) in Kontakt kommen kann, entlang des Umfangsrandabschnitts (36) gleiten kann und in den konkaven Abschnitt (34) eingesetzt werden kann.

4. Getriebe nach Anspruch 3, wobei der Umfangsrandabschnitt (36) abgeschrägt ist.

5. Getriebe nach Anspruch 2, wobei ein Aufbau derart ist, dass, wenn das Stellglied (110) im Inneren des Gehäuses (60) eingebaut ist, das Stellglied (110) außerhalb eines Stellgliedbewegungsbereichs positioniert werden kann, in dem sich das Stellglied (110) während eines Schaltens bewegen kann, um zu bewirken, dass der Hebelabschnitt (27) in den konkaven Abschnitt (34) eingesetzt wird.

6. Verfahren zum Herstellen eines Getriebes, das eine Antriebswelle (402), die bei Aufnahme einer Antriebsleistung von einer Antriebsquelle (200) dreht, und eine Abtriebswelle (404) hat, die parallel zu der Antriebswelle (402) angeordnet ist, und in dem ein Schalten durch Umwandeln einer Drehzahl der Antriebswelle (402) und Übertragen der Drehung zu der Abtriebswelle (404) durch Umschalten von Schalträdern (410, 411, 412, 413, 415) einer Vielzahl von Stufen durchgeführt wird, wobei das Verfahren die folgenden Schritte aufweist:
Bereitstellen einer Welle (20), die einen Eingriffszustand der Schalträder (410, 411, 412, 413, 415) umschaltet und eine Schaltbetätigung durch Hin- und Herbewegen in einer axialen Richtung und Drehen um eine Achse einrichtet;
Bereitstellen eines Stellglieds (110), das die Welle (20) während eines Schaltens bewegt;
Bereitstellen eines Gehäuses (60), das die Welle (20) und das Stellglied (110) umschließt;
**gekennzeichnet durch**
Bewirken, dass ein Anschlag (29), der an der Welle (20) vorgesehen ist, an einer Anschlagfläche (62) anliegt, die an dem Gehäuse (60) in einer Position außerhalb eines Wellenbewegungsbereichs ausgebildet ist, in dem sich die Welle (20) während eines Schaltens bewegt, und Stoppen der Welle (20) im Inneren des Gehäuses (60); und
in Eingriff bringen des Stellglieds (110) mit der Welle (20) und Einbauen des Stellglieds (110) im Inneren des Gehäuses (60), während die Welle (20) in den Wellenbewegungsbereich bewegt wird.

## Revendications

1. Transmission qui possède un arbre d'entraînement (402) qui tourne lors de la réception d'une énergie d'entraînement provenant d'une source d'entraînement (200), et un arbre entraîné (404) disposé parallèlement à l'arbre d'entraînement (402), et dans laquelle le changement de vitesse est effectué par conversion d'une vitesse de rotation de l'arbre d'entraînement (402) et par transmission de la rotation à l'arbre entraîné (404) par commutation d'engrenages de changement de vitesse (410, 411, 412, 413, 415) d'une pluralité d'étages, comportant :
un arbre (20) qui commute un état d'engrènement des engrenages de changement de vitesse (410, 411, 412, 413, 415) et qui établit une opération de changement de vitesse par déplacement en va et vient dans une direction axiale et par rotation autour d'un axe ;
un actionneur (110) qui déplace l'arbre (20) pendant le changement de vitesse ; et
un boîtier (60) qui renferme l'arbre (20) et l'actionneur (110), où
l'arbre (20) comporte une butée (29) qui bute contre le boîtier (60), et
le boîtier (60) comporte une surface d'arrêt (62) contre laquelle la butée (29) bute, et
la butée (29) limite la rotation de l'arbre (20) autour de l'axe, **caractérisée en ce que**
la surface d'arrêt (62) est formée dans une position à l'extérieur d'une plage de déplacement de l'arbre dans laquelle l'arbre (20) tourne autour de l'axe pendant le changement de vitesse.

2. Transmission selon la revendication 1, où
l'arbre (20) comprend une partie de levier (27) qui fait saillie à partir d'une surface circonférentielle extérieure de l'arbre (20) ;
une partie concave (34) dans laquelle la partie de levier (27) peut être insérée est formée dans l'actionneur (110) ; et
où une configuration est telle que, lorsque qu'il est installé dans le boîtier (60), l'actionneur (110) peut faire tourner l'arbre (20) autour de l'axe pour déplacer l'arbre (20) dans sa plage de déplacement en insérant la partie du levier (27) dans la partie concave (34) dans un état où la butée (29) est en contact avec la surface d'arrêt (62) et l'arbre (20) est arrêté.

3. Transmission selon la revendication 2, où une configuration est telle que, lorsque l'actionneur (110) est installé à l'intérieur du boîtier (60), la partie du levier (27) peut entrer en contact avec une partie de bord circonférentielle (36) de la partie concave (34), peut glisser le long de la partie de bord circonférentielle (36) et peut être insérée dans la partie concave (34).

4. Transmission selon la revendication 3, où la partie de bord circonférentielle (36) est chanfreinée.

5. Transmission selon la revendication 2, où une configuration est telle que, lorsque l'actionneur (110) est installé à l'intérieur du boîtier (60), l'actionneur (110) peut être positionné à l'extérieur de sa plage de déplacement dans laquelle l'actionneur (110) peut se déplacer pendant le changement de vitesse, pour amener la partie du levier (27) à s'insérer dans la partie concave (34).

6. Procédé de fabrication d'une transmission qui possède un arbre d'entraînement (402) qui tourne lors de la réception d'une énergie d'entraînement provenant d'une source d'entraînement (200), et un arbre entraîné (404) disposé parallèlement à l'arbre d'entraînement (402), et dans lequel le changement de vitesse est effectué par conversion d'une vitesse de rotation de l'arbre d'entraînement (402) et par transmission de la rotation à l'arbre entraîné (404) par commutation d'engrenages de changement de vitesse (410, 411, 412, 413, 415) d'une pluralité d'étages, le procédé comprenant les étapes suivantes qui consistent :
à préparer un arbre (20) qui commute un état d'engrènement des engrenages de changement de vitesse (410, 411, 412, 413, 415) et qui établit une opération de changement de vitesse par déplacement en va et vient dans une direction axiale et par rotation autour d'un axe ;
à préparer un actionneur (110) qui déplace l'arbre (20) pendant le changement de vitesse ;
à préparer un boîtier (60) qui renferme l'arbre (20) et l'actionneur (110) ;
**caractérisé par** le fait
d'amener une butée (29) qui est prévue au niveau de l'arbre (20) à buter contre une surface d'arrêt (62) formée au niveau du boîtier (60) dans une position à l'extérieur d'une plage de déplacement de l'arbre dans laquelle l'arbre (20) se déplace pendant le changement de vitesse, et à arrêter l'arbre (20) à l'intérieur du boîtier (60) ; et
d'engager l'actionneur (110) avec l'arbre (20), et installer l'actionneur (110) à l'intérieur du boîtier (60), tout en déplaçant l'arbre (20) dans sa plage de déplacement.
